# EUROPEAN PATENT SPECIFICATION

(11) **EP 3 301 821 B1**
(45) Date of publication and mention of the grant of the patent: **21.08.2019**
(21) Application number: 16465542.5
(22) Date of filing: 29.09.2016
(51) Int. Cl.: H04B 5/00, H01Q 7/00

(54) **ANTENNA FOR AN NFC DEVICE AND NFC DEVICE**
ANTENNE FÜR EINE NFC-VORRICHTUNG SOWIE NFC-VORRICHTUNG
ANTENNE POUR UN DISPOSITIF NFC ET DISPOSITIF NFC

(43) Date of publication of application: 04.04.2018
(73) Proprietor: Continental Automotive GmbH, 30165 Hannover (DE)
(72) Inventor: Birtalan, Arpad, 537005 Atid (RO); Craciun, Serban, 325400 Caransebes (RO)

(56) References cited:
- EP-A1- 2 858 261
- EP-A2- 2 216 914
- WO-A1-2004/026025
- WO-A1-2016/132654
- JP-A- 2012 151 785
- US-B2- 9 189 667

## Description

The invention is concerned with an antenna for an NFC device. The antenna comprises at least one wire loop. The invention also comprises an NFC device than can be used as an NFC reader or as an NFC receiver.

D1 US 9 189 667 B2, D2 JP 2012 151785 A, WO 2016/132654 A1, EP 2 216 914 A2, EP 2 858 261 A1, WO 2004/026025 A1 concern antennas and methods for e.g. NFC communication.

An NFC reader may comprise an antenna with a wire loop that may be connected to an electronic circuit of the NFC reader. The wire loop functions as a reader antenna that may generate an antenna near field such that the wire loop is electro-magnetically coupled to another wire loop of the antenna of a second NFC device . By coupling the wire loop of the NFC reader with the wire loop of the second NFC device the near field generates an electric voltage in the wire loop of the second NFC device according to the principle of the transformer. By modulating the resulting electric current in the wire loop of the second NFC device the second NFC device may transmit data to the NFC reader. The carrier frequency of the field generated by the NFC reader may be in the range of 13.56 MHz plus/minus 7 kHz. This technology for NFC devices is standardized by, e.g., ISO 14443 and the NFC forum specifications.

For coupling the wire loop of the reader device, that is a first NFC device, with the wire loop of a second NFC device, it must be made sure that the near field of the antenna of the first NFC device penetrates the loop area of wire loop of the second NFC device.

The wire loop of an NFC antenna can be constituted by a single spiral loop. The antenna characteristics are specified by the number of turns, outline dimensions, copper or track thickness, width and spacing. In general, the wire loop of an antenna of an NFC device is flat. In other words, the loop area that is defined or delimited by the wire loop, is a flat or planar or plane area. In order to couple two such flat wire loops in the described sense, the magnetic flux generated by one wire loop must penetrate the loop area of the other wire loop. Thus, the wire loops must be placed in parallel or co-planar to each other such that the flat loop area of one antenna lies on top of the flat loop area of the second antenna.

In order to have NFC communication between two NFC devices, their antennas with the wire loop must be placed in close proximity or within a close operating volume to each other and they must be arranged co-planar to each other.

However, due to limited available space it might not be possible to arrange two NFC devices exactly in such a way that their antennas are co-planar. For example, in a motor vehicle, an NFC device may be provided in the interior of the vehicle for coupling a second NFC device (e.g. a mobile phone) with the infotainment system of the motor vehicle. This normally requires a large flat area for placing the mobile phone inside the motor vehicle.

It is an object of the present invention to provide a reliable coupling between the antennas of two NFC devices.

The object is achieved by the subject matter of the independent claims. Advantageous developments with convenient and non-trivial further embodiments of the invention are specified in the following description, the dependent claims and the figure.

The invention provides an antenna for an NFC device. The antenna comprises at least one wire loop made of a wire, wherein each wire loop delimits a loop area such that an electric current and/or an electric voltage in the wire is coupled to a magnetic flux that penetrates the loop area. In other words, by providing an electric current in the wire, a magnetic near field may be provided, that is a magnetic field that is generated by the current flowing through the wire. On the other hand, by changing the magnetic flux that penetrates the loop area, an electric voltage is induced in the wire according to the law of induction.

The wire of the at least one wire loop is shaped as follows: starting from an electric contacting area of the wire loop where the wire may be electrically connected to a control circuit, the wire forms a first half circle in a first plane and is then oriented perpendicular to the first plane towards a second plane that is arranged parallel to the first plane and then forms a circle, apart from a gap, in the second plane and is then oriented back towards the first plane and then forms a second half circle in the first plane to finally reach the electric contacting area, wherein the first half circle and the second half circle form a full circle, apart from two gaps.

In order to couple such a magnetic field of the inventive antenna with a wire loop of a second antenna of another NFC device, the magnetic field of the wire loop must penetrate the loop area of the wire loop of the second antenna such that the second antenna may modulate the field according to NFC standards.

In order to achieve this coupling in a reliable manner, the loop area of the inventive antenna is not flat or plane. In contrast, the respective loop area of the at least one wire loop is bent or folded such that it encompasses a volume. For example, the loop area may be shaped like the side of a geometric cylinder or like a tube.

The invention provides the advantage that the magnetic field generated by the wire loop in case an electrical current is flowing through the wire is not simply directed or oriented perpendicular to a flat loop area. As the loop area of the wire loop is uneven or bent or folded, the field vectors of the magnetic field penetrating the loop area point into different directions. A wire loop of an antenna of another NFC device may thus be placed in the proximity of the inventive antenna in several different orientations and it will still be reliably penetrated by the magnetic field of the inventive antenna.

The invention also comprises optional embodiments that provide features which afford additional technical advantages.

In order to optimize the spreading of the magnetic field of the inventive antenna with the wire loop, the loop area is preferably bent or folded around an axis wherein the axis around which the loop area is bent or folded is oriented perpendicular to each normal vector of the loop area.

Preferably, the loop area of each wire loop is shaped like a cylinder or tube. In other words, the loop area is bent around an axis and encompasses the volume to more than 80%, preferably more than 90%. This allows for placing a wire loop of a second antenna inside the encompassed volume and the orientation of this second wire loop can be varied without losing a high degree of coupling with the inventive antenna.

The effect of bending or folding the loop area is that different sections of the same wire of the wire loop form different sub-loops. In other words, by bending or folding the loop area around the volume, the wire of the wire loop forms a respective further wire loops, i.e. the sub-loops, one at each end of the volume. Especially, the antenna characteristics of the bent loop area comprises at least two perpendicular coils.

A preferred shape of the wire of the wire loop is the following: starting from a contact area for electrically contacting the wire loop, the wire forms a first half circle in a first plane and is then oriented perpendicular to the first plane towards a second plane that is arranged parallel or co-planar to the first plane. Following the wire further, the wire forms a full circle in the second plane and is then oriented back towards the first plane, where the wire forms a second half circle in the first plane to finally reach the contacting area. The first half circle in the first plane and the second half circle in the first plane together form a full circle. This shape may be repeated several times to obtain several windings of the wire loop. A "full circle" does not mean that the wire is short-circuited to form the full circle. A full circle of the wire is given, if the wire forms more than 70% of a circle and the remaining or missing part or the circle is used for direction an electric current into the circular loop and out of the circular loop.

Preferably, the antenna is designed as a storage container, wherein walls of the storage container delimit said volume and wherein the at least one wire loop is integrated into the storage walls. Such a storage container may be used to place a second NFC device inside the volume and hold it there.

Preferably, the storage container is designed as a cup holder or a coin holder or a door handle storage box or a glove box or a cradle for a portable mobile device or a general purpose storage box for a motor vehicle. This allows to hold the second NFC device, e.g. a mobile phone or smartphone, inside a motor vehicle.

Alternatively, the antenna may be designed as a bracelet for a watch or a smart watch. This design can enhance the freedom of positioning the antenna when it is worn as a bracelet at an arm of a user. The bracelet may comprise a wristband and the wire loop may be integrated into the material of the wristband.

By integrating the antenna into an NFC device, the inventive NFC device is obtained. Additionally, the inventive NFC device comprises a control circuit to transmit and/or receive communication data via the antenna on the basis of an NFC technology.

Preferably, the control circuit is designed to set up a communication channel for communicating with more than one other NFC device at the same time. In other words, the control circuit comprises a collision avoidance protocol such that two other NFC devices may be positioned or placed inside the volume and/or around the inventive antenna. Although two or more than two other NFC devices may communicate with the inventive NFC device, only one antenna with only one wire loop is needed or one antenna is sufficient, as the inventive antenna comprises multi-dimensional antenna characteristics that may couple with two different NFC device at the same time.

In the following an exemplary implementation of the invention is described. The figures show:
- Fig. 1: a schematic illustration of an embodiment of the inventive NFC device;
- Fig. 2: a sketch for illustrating the principle of an antenna comprised in the NFC device of Fig. 1;
- Fig. 3: a schematic illustration of the antenna in a first possible arrangement of antennas;
- Fig. 4: a schematic illustration of the antenna in a second possible arrangement of antennas;
- Fig. 5: a schematic illustration of the antenna designed as a bracelet; and
- Fig. 6: a schematic illustration of the antenna designed as a storage device.

The embodiment explaneed in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

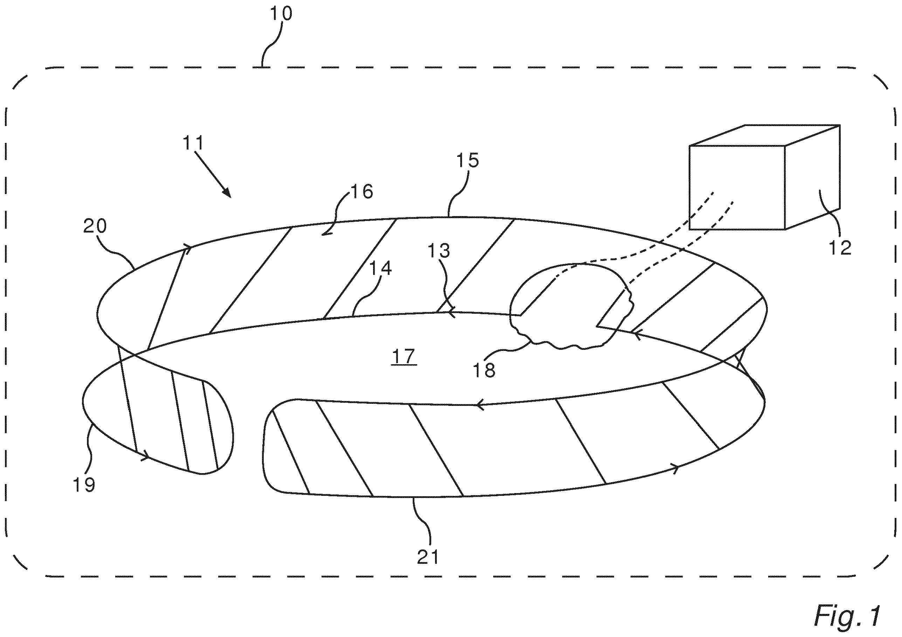

Fig. 1 shows an NFC device 10 with an antenna 11 and a control circuit 12. The antenna 11 may be electrically connected to the control circuit 12. The control circuit 12 may comprise electronic components and/or a microcontroller and/or a microprocessor. The control circuit 12 may control an electric current 13 that may flow through a wire 14 of the antenna 11. The wire 14 is shaped or formed as a wire loop 15. The wire loop 15 is not flat. A loop area 16 that is delimited by the wire 14, is bent. The resulting shape of the loop area 16 is indicated by the hatching (///). The wire loop 15 may also be folded, that is the loop area 16 may comprise a kink or buckle. The loop area 16 is wrapped around or encompasses a three dimensional spatial segment or volume 17.

As is shown in Fig. 1, the wire 14 starts at an electric contacting area 18 where the wire may be electrically connected to the control circuit 12. Starting from the contacting area 18 the wire forms a first half circle 19 in a first plane is then bent up towards a second plane where the wire 14 is shaped as a full circle 20 (apart from a gap). From the second plane the wire 14 then continues back to the first plane where wire 14 forms a second half circle 21 and thus reaches the contacting area 18 again. The first half circle 19 and the second half circle 21 form a second full circle (apart from two gaps) that is arranged co-planar to first full circle 20. The two full circles each constitute a separate wire loop, as in each full circle the electric current 13 flows unidirectional in a circle.

The two full circles each constitute a sup-loop, i.e. a wire loop is provided at each end and of the volume 17. A magnetic field generated by these winding sub-loops is oriented perpendicular to a magnetic field generated by the entire wire loop 15 in the loop area 16. This results in antenna characteristics with perpendicular coils.

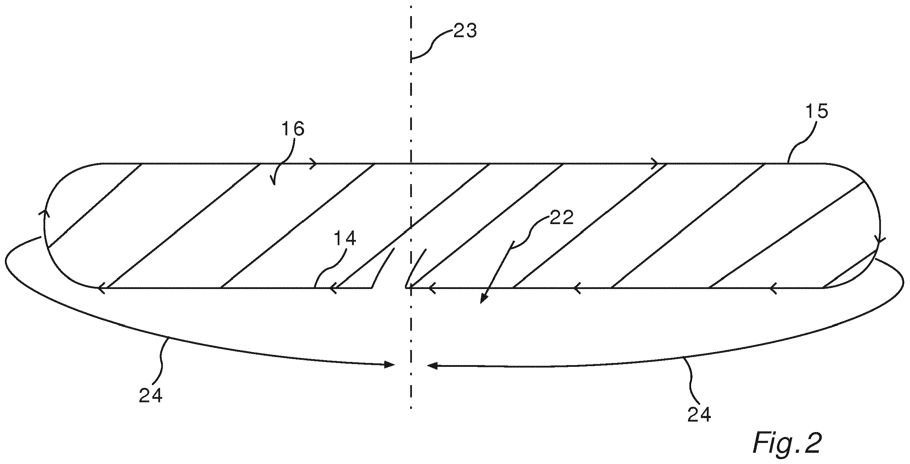

Fig. 2 illustrates the difference between a flat or plane wire loop and the wire loop 15 of the antenna 11.

In Fig. 2, the wire loop 15 is shown as a flat, conventional loop such that a normal vector or perpendicular vector 22 is identically oriented at each point of loop area 16. Starting from this conventional shape of the wire loop 15, the loop area may be bent around an axis 23 that is perpendicular to normal vector 22. The bending direction 24 of the wire 14 is illustrated in Fig. 2. This results in the shape shown in Fig. 1.

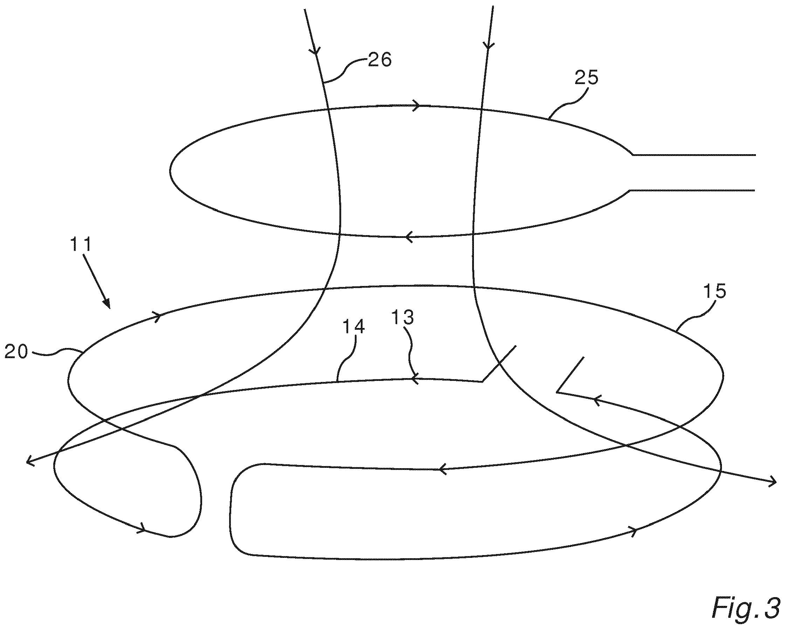

Fig. 3 illustrates how a conventional wire loop 25 of a second NFC device that may be placed next to the volume 17 and may thus be penetrated by magnetic field lines 26 generated by the current 13 in the wire loop 15. The wire loop 25 may be arranged outside the volume 17. The shape of the field lines 26 is mainly influenced by the top circle 20.

The second NFC device may be part of a mobile device, like. e.g., a smartphone or a tablet PC.

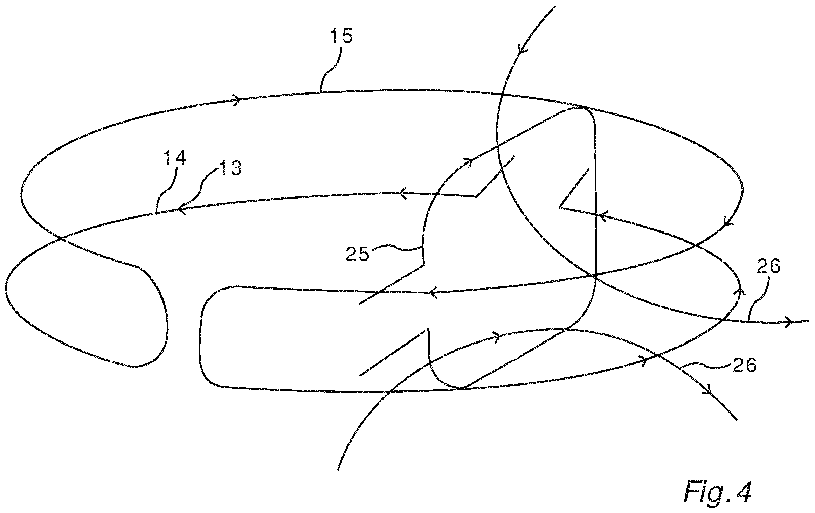

Fig. 4 illustrates, how a wire loop 25 of a second NFC device may be penetrated by field lines 26, if the wire loop 25 is arranged inside the volume 17. The shape of the field lines inside volume 17 may be mainly influenced by the shape of the loop area 16 that is the whole wire loop 15. The wire loop 25 may be rotated around the axis 23 and the coupling of the wire loop 25 with the wire loop 15 is above a pre-defined minimum value for all positions.

Comparing Fig. 3 and Fig. 4 illustrates, how a wire loop 15 may comprise different spatial orientations and still a good coupling of the wire loop 15 and the wire loop 25 is possible for any relative orientation or position.

The antenna 11 does not depend on placing the second wire loop 25 side-by-side in a co-planar manner to the wire loop 15 for ensuring a coupling between the two wire loops 15, 25. Instead, antenna 11 provides a wire loop 15 that ensures a multidimensional NFC operating volume. Due to the multidimensionality it is not necessary to place the second device with its wire loop 25 in a parallel, co-planar plane to the wire loop 15 of the NFC device 10 with antenna 11. The antenna 11 even provides multiple possible orientations for the second wire loop 25 (see Fig. 3 and Fig. 4) .

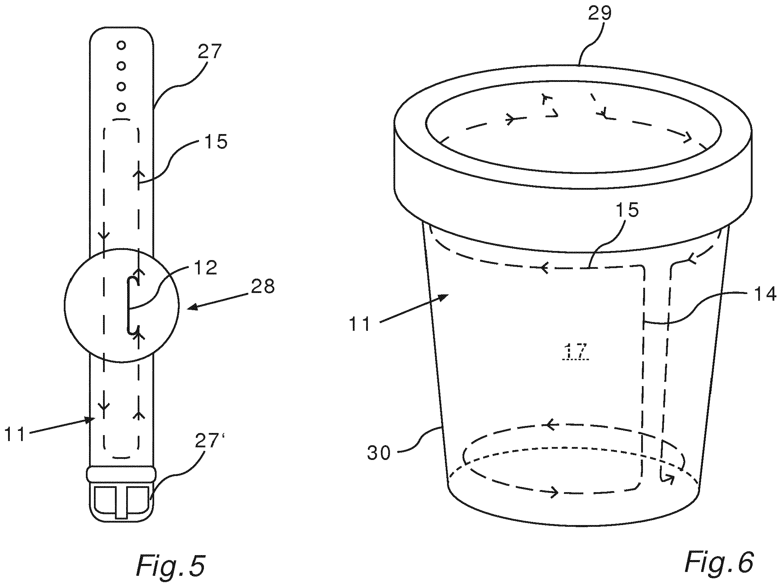

Fig. 5 illustrates, how the antenna 11 may be designed as a bracelet 27 of a watch 28. Fig. 5 shows how the antenna 11 may be integrated into a bracelet 27 with a buckle 27'.

Fig. 6 illustrates, how the antenna 11 may be designed as a storage container 29 that may be, e.g., a cup holder. The volume 17 may be delimited by walls 30 of the storage container 29 and the wire 14 of the wire loop 15 may be integrated in the wall 30. By placing a second NFC device, e.g. a mobile device, inside the storage container 29, a coupling between antenna 11 and a wire loop of the second NFC device may be provided.

It may be only possible to place two different NFC devices inside volume 17 or in the surroundings of antenna 11 and still the wire loops of both NFC devices may experience a good coupling with antenna 11.

The wire loop can be designed in a single loop or multiple wire loops. The antenna 11 can generate a magnetic field with field lines 26 that are oriented in multiple perpendicular directions with a field density that is similar for all directions. "Similar" can mean that at the surface of volume 17, the field density may vary less than 30%. Further, a wire loop 25 of another NFC device may also be placed inside the volume 17 that is enclosed by loop area 16.

The advantages of using the shown antenna 11 are:
- Multiple positioning places for the wire loop 25 of a second NFC device. It is not necessary to place the target antenna with its wire loop 25 in a parallel plane with the antenna wire loop 15 of NFC device 10.
- It provides freedom in positioning the second wire loop 25.
- The antenna 11 can be applied to an NFC reader in an automotive domain and it can be integrated in various locations inside a motor vehicle like in a cup holder (see Fig. 6), a coin holder, a door handle storage box or another storage box or in the exterior of the motor vehicle.
- Using one or more NFC devices at the same time is also possible such that several other wire loops 25 are arranged inside the magnetic field of the antenna 11. For example, multiple mobile phones and/or NFC cards can be placed inside the magnetic field of antenna 11 at the same time, depending on the diameter of the volume 17.
- The antenna 11 can also be implemented or integrated in a bracelet 27 of a watch 28 or a smart watch, where the NFC functionality is wanted (see Fig. 5). If the antenna 11 is integrated in or designed as a bracelet 27, this design can enhance the freedom of positioning the bracelet 27 related to another NFC reader device due to its multidimensional antenna characteristics.

Overall, the examples show how a multidimensional NFC antenna is provided by the invention.

### Reference signs

- 10: NFC device
- 11: antenna
- 12: circuit
- 13: current
- 14: wire
- 15: loop
- 16: area
- 17: volume
- 18: area
- 19: circle
- 20: circle
- 21: circle
- 22: vector
- 23: axis
- 24: direction
- 25: loop
- 26: lines
- 27: bracelet
- 28: watch
- 29: container
- 30: walls

## Claims

1. Antenna (11) for an NFC device (10), the antenna (11) comprising at least one wire loop (15) of a wire (14), wherein each wire loop (15) delimits a loop area (16) such that an electric current (13) and/or an electric voltage in the wire (14) is coupled to a magnetic flux (26) that penetrates the loop area (16), and wherein the respective loop area (16) of the at least one wire loop (15) is bent or folded around a volume (17), **characterized in that** the wire (14) of the at least one wire loop (15) is shaped as follows: starting from an electric contacting area (18) of the wire loop (15) where the wire may be electrically connected to a control circuit, the wire (14) forms a first half circle (19) in a first plane and is then oriented perpendicular to the first plane towards a second plane that is arranged parallel to the first plane and then forms a circle (20), apart from a gap, in the second plane and is then oriented back towards the first plane and then forms a second half circle (21) in the first plane to finally reach the electric contacting area (18), wherein the first half circle (19) and the second half circle (21) form a full circle, apart from two gaps.

2. Antenna (11) according to claim 1, wherein the respective loop area (16) of the at least one wire loop (15) encompasses the volume (17) to more than 80%, preferably more than 90%.

3. Antenna (11) according to any of the preceding claims, wherein an axis (23) around which the loop area (16) is bent or folded is oriented perpendicular to a normal vector (22) of the loop area (16).

4. Antenna (11) according to any of the preceding claims, wherein by the bending or folding of the loop area (16) around the volume (17), the wire (14) of the winding loop (15) forms a respective further winding loop (20; 19, 21), one at each end of the volume (17).

5. Antenna (11) according to any of the preceding claims, wherein the antenna (11) is designed as a storage container (29), wherein walls (30) of the storage container (29) delimit the volume (17) and the at least one wire loop (15) is integrated into the walls (39) of the storage container (29).

6. Antenna (11) according to claim 5, wherein the storage container (29) is designed as a cup holder or a coin holder or a door handle storage box or a glove box or a cradle for a portable mobile device or a general purpose storage box for a motor vehicle.

7. Antenna (11) according to claims 1 to 5, wherein the antenna (11) is designed as a bracelet (27) for a watch (28) or for a smart watch.

8. NFC device (10) with an antenna (11) according to any of the preceding claims and with a control circuit (12) for transmitting and/or receiving communication data via the antenna (11) on the basis of an NFC technology.

9. NFC device (10) according to claim 8, wherein the control circuit (12) is designed to set up a communication channel for communicating with more than one other NFC device (25) at the same time.

10. NFC device (10) according to claim 8 or 9, wherein it is a cellular mobile telecommunication device.

## Patentansprüche

1. Antenne (11) für eine NFC-Vorrichtung (10), die Antenne (11) umfassend mindestens eine Drahtschlaufe (15) eines Drahts (14),
wobei jede Drahtschlaufe (15) einen Schlaufenbereich (16) begrenzt, sodass ein elektrischer Strom (13) und/oder eine elektrische Spannung in dem Draht (14) mit einem magnetischen Fluss (26) gekoppelt ist, der den Schlaufenbereich (16) durchdringt, und
wobei der jeweilige Schlaufenbereich (16) von mindestens einer Drahtschlaufe (15) um ein Volumen (17) gebogen oder gefaltet ist, **dadurch gekennzeichnet, dass**
der Draht (14) der mindestens einen Drahtschlaufe (15) wie folgt geformt ist: Beginnend an einem elektrischen Kontaktbereich (18) der Drahtschlaufe (15), in dem der Draht elektrisch mit einem Steuerschaltkreis verbunden sein kann,
formt der Draht (14) einen ersten Halbkreis (19) in einer ersten Ebene und ist dann rechtwinklig zur ersten Ebene zu einer zweiten Ebene hin ausgerichtet, die parallel zu der ersten Ebene angeordnet ist, und formt dann mit Ausnahme einer Lücke einen Kreis (20) in der zweiten Ebene, und ist dann wieder zurück zur ersten Ebene orientiert, und formt dann einen zweiten Halbkreis (21) in der ersten Ebene, um schließlich den elektrischen Kontaktbereich (18) zu erreichen,
wobei der erste Halbkreis (19) und der zweite Halbkreis (21) mit Ausnahme von zwei Lücken einen vollen Kreis bilden.

2. Antenne (11) nach Anspruch 1, wobei der jeweilige Schlaufenbereich (16) der mindestens einen Drahtschlaufe (15) das Volumen (17) zu mehr als 80% umgibt, vorzugsweise zu mehr als 90%.

3. Antenne (11) nach einem der vorhergehenden Ansprüche, wobei eine Achse (23), um die der Schlaufenbereich (16) gebogen oder gefaltet ist, rechtwinklig zu einem normalen Vektor (22) des Schlaufenbereichs (16) orientiert ist.

4. Antenne (11) nach einem der vorhergehenden Ansprüche, wobei der Draht (14) der Wickelschlaufe (15) durch Biegen oder Falten des Schlaufenbereichs (16) um das Volumen (17) eine jeweilige weitere Wickelschlaufe (20; 19, 21) formt, und zwar eine an jedem Ende des Volumens (17).

5. Antenne (11) nach einem der vorhergehenden Ansprüche, wobei die Antenne (11) als ein Aufbewahrungsbehälter (29) entworfen ist, wobei Wände (30) des Aufbewahrungsbehälters (29) das Volumen (17) begrenzen und die mindestens eine Drahtschlaufe (15) in die Wände (39) des Speicherbehälters (29) integriert ist.

6. Antenne (11) nach Anspruch 5, wobei der Aufbewahrungsbehälter (29) als Tassenhalter oder Münzenhalter oder Türgriffaufbewahrungsbox oder Handschuhfach oder Halterung für eine tragbare mobile Vorrichtung oder eine Aufbewahrungsbox für allgemeine Zwecke für ein Kraftfahrzeug entworfen ist.

7. Antenne (11) nach den Ansprüchen 1 bis 5, wobei die Antenne (11) als ein Armband (27) für eine Armbanduhr (28) oder für eine Smart Watch entworfen ist.

8. NFC-Vorrichtung (10) mit einer Antenne (11) nach einem der vorhergehenden Ansprüche und mit einem Steuerschaltkreis (12) zum Übertragen und/oder Empfangen von Kommunikationsdaten über die Antenne (11) auf Grundlage einer NFC-Technologie.

9. NFC-Vorrichtung (10) nach Anspruch 8, wobei der Steuerschaltkreis (12) entworfen ist, einen Kommunikationskanal zur Kommunikation mit mehr als einer anderen NFC-Vorrichtung (25) gleichzeitig aufzubauen.

10. NFC-Vorrichtung (10) nach Anspruch 8 oder 9, wobei sie eine zelluläre Mobiltelekommunikationsvorrichtung ist.

## Revendications

1. Antenne (11) pour un dispositif NFC (10), l'antenne (11) comprenant au moins une boucle de fil (15) d'un fil (14), chaque boucle de fil (15) délimitant une surface de boucle (16) de telle sorte qu'un courant électrique (13) et/ou une tension électrique dans le fil (14) sont couplés à un flux magnétique (26) qui pénètre dans la surface de boucle (16), et la surface de boucle respective (16) de l'au moins une boucle de fil (15) étant cintrée ou pliée autour d'un volume (17),
**caractérisée en ce que** le fil (14) de l'au moins une boucle de fil (15) est façonné comme suit : en partant d'une zone de contact électrique (18) de la boucle de fil (15) où le fil peut être relié électriquement à un circuit de commande, le fil (14) forme un premier demi-cercle (19) dans un premier plan et est ensuite orienté perpendiculairement au premier plan vers un deuxième plan qui est disposé parallèlement au premier plan et forme ensuite un cercle (20), à part un interstice, dans le deuxième plan et est ensuite orienté de nouveau vers le premier plan et forme ensuite un deuxième demi-cercle (21) dans le premier plan pour finalement atteindre la zone de contact électrique (18), le premier demi-cercle (19) et le deuxième demi-cercle (21) formant un cercle complet, à part deux interstices.

2. Antenne (11) selon la revendication 1, dans laquelle la surface de boucle respective (16) de l'au moins une boucle de fil (15) englobe le volume (17) à plus de 80 %, de préférence plus de 90 %.

3. Antenne (11) selon l'une quelconque des revendications précédentes, dans laquelle un axe (23) autour duquel la surface de boucle (16) est cintrée ou pliée est orienté perpendiculairement à un vecteur normal (22) de la surface de boucle (16).

4. Antenne (11) selon l'une quelconque des revendications précédentes, dans laquelle, par le cintrage ou le pliage de la surface de boucle (16) autour du volume (17), le fil (14) de la boucle d'enroulement (15) forme une autre boucle d'enroulement respective (20 ; 19, 21), une à chaque extrémité du volume (17).

5. Antenne (11) selon l'une quelconque des revendications précédentes, l'antenne (11) étant conçue comme un récipient de stockage (29), des parois (30) du récipient de stockage (29) délimitant le volume (17) et l'au moins une boucle de fil (15) étant intégrée dans les parois (39) du récipient de stockage (29).

6. Antenne (11) selon la revendication 5, le récipient de stockage (29) étant conçu comme un porte-gobelet ou un range-monnaie ou un vide-poches de portière ou une boîte à gants ou un berceau pour un dispositif mobile portable ou un compartiment de stockage d'usage général pour un véhicule à moteur.

7. Antenne (11) selon les revendications 1 à 5, l'antenne (11) étant conçue comme un bracelet (27) pour une montre (28) ou pour une montre intelligente.

8. Dispositif NFC (10) avec une antenne (11) selon l'une quelconque des revendications précédentes et avec un circuit de commande (12) destiné à émettre et/ou recevoir des données de communication par le biais de l'antenne (11) sur la base d'une technologie NFC.

9. Dispositif NFC (10) selon la revendication 8, dans lequel le circuit de commande (12) est conçu pour configurer un canal de communication pour communiquer avec plusieurs autres dispositifs NFC (25) en même temps.

10. Dispositif NFC (10) selon la revendication 8 ou 9, qui est un dispositif de télécommunications mobiles cellulaires.
